# EUROPEAN PATENT SPECIFICATION

(11) **EP 2 676 094 B1**
(45) Date of publication and mention of the grant of the patent: **04.12.2019**
(21) Application number: 12705041.7
(22) Date of filing: 24.01.2012
(51) Int. Cl.: F28D 1/03, F28D 1/053, F28F 1/02, F28F 21/08, F28F 9/18, B23K 33/00, B21D 53/04, F28F 1/00

(54) **METHOD OF PRODUCING A HEAT EXCHANGER AND A HEAT EXCHANGER**
HERSTELLUNGSVERFAHREN FÜR WÄRMETAUSCHER UND WÄRMETAUSCHER
PROCÉDÉ DE FABRICATION D'UN ÉCHANGEUR DE CHALEUR ET ÉCHANGEUR DE CHALEUR

(30) Priority: 18.02.2011 DK 201100113
(43) Date of publication of application: 25.12.2013
(73) Proprietor: Nissens A/S, 8700 Horsens (DK)
(72) Inventor: NISSEN, Alan, DK8700 Horsens (DK)
(74) Representative: Nordic Patent Service A/S
(86) International application number: PCT/DK2012/000004
(87) International publication number: WO 2012/110036

(56) References cited:
- EP-A1- 0 457 470
- DE-A1-102006 002 789
- JP-A- 59 016 693
- US-A- 2 759 246
- US-A- 4 377 024
- US-A1- 2001 000 879
- US-A1- 2007 051 499
- US-A1- 2010 012 303

## Description

The invention is related to a method of producing a heat exchanger such as a plate and fin heat exchanger where one fluid is cooled by another fluid. For example a radiator for a combustion engine where the coolant (e.g. a mixture of water and glycol) is cooled down by the surrounding air passing the radiator.

### Background of the invention

A known heat exchanger is the radiator in a car, in which the heat source, being a hot engine-cooling fluid such as water, transfers heat to air flowing through the radiator. Heat exchangers of metal have good heat transfer efficiency, a large heat transfer area, and can withstand high pressures.

A special heat exchanger is a plate and fin heat exchanger, which is particularly suited for systems operating with low temperatures. Nowadays plate and fin heat exchangers may be preferred for cooling motor engines. However, there is a problem with pressure loss and/or clogging in the plate and fin heat exchanger as the pathways are very narrow and therefore difficult to keep free for passage of the heat exchange fluid.

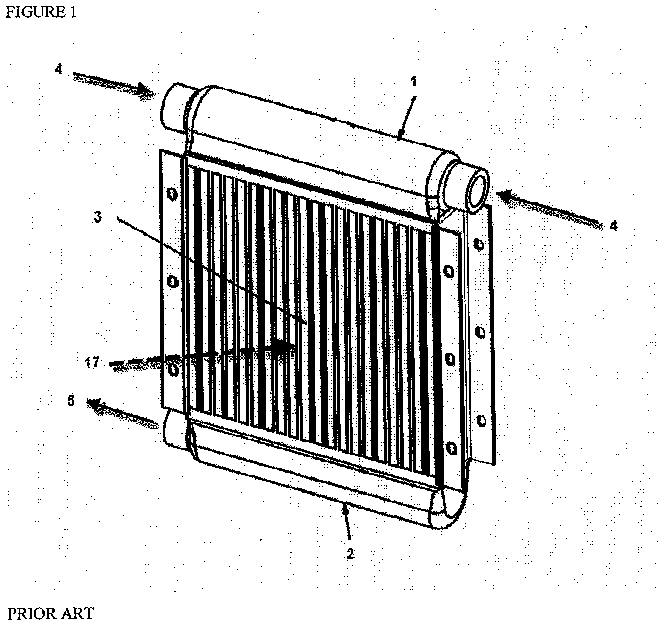

A known plate and fin heat exchanger which has been illustrated in fig. 1, comprises at least one heat exchanger core 3, at least one inlet manifold 1 with at least one inlet 4 and at least one outlet manifold 2 with at least one outlet 5. The heat exchanger core comprises a row of alternately heat exchanger elements 6 and air fins 7, which are assembled and joined together e.g. by brazing or soldering. Each of the heat exchanger elements 6 is an element with at least one internal channel capable of transporting a fluid from at least one inlet 4a to at least one outlet 5a of the channel, where the fluid exchanges heat with another fluid surrounding the heat exchanger element and the air fins 7 adjacent to the heat exchanger element. The heat exchanger element is often composed of tubes or tube plates 8, which are separated by tube bars and joined by a suitable joining technique e.g. brazing or soldering. The heat exchanger core 3 and the manifolds 1, 2 are joined by a suitable joining technique e.g. welding. The inlet manifold 1 is connected to an inlet pipe for providing fluid, such as anti-freeze, to the heat exchanger elements 6, and the outlet manifold 2 is connected to an outlet pipe for transporting fluid away from the heat exchanger elements 6 to the heat source e.g. the hot engine and back to the heat exchanger via the inlet pipe. This circulation of the fluid between the heat exchanger and the heat source is performed in a repeated cycle. Two types of known plate and fin heat exchangers are the "cup" principle heat exchangers with tube-formed or "cup"-formed heat exchanger elements and the plate and bar heat exchangers

EP0943884 describes a heat exchanger with pairs of plates having through holes at both ends and a channel extending between the through holes. In order to make room for the outer fins between the pairs of plates it is necessary to insert header forming members between each pair of plates. The header forming members are primarily provided with a flat portion adapted to overlap corresponding flat portions on the edges of the through holes of the plates, and secondly with recessed portions adapted to fit to convex surfaces at the ends of the channel portions. Inlet and outlet manifolds are primarily made up from the header forming members extending in the longitudinal direction of the heat exchanger, and secondly from the area around the through holes. Four different types of header forming members are needed; the ones with only one recessed portion at either the upper or lower end surface are located at each end of the manifolds, and either may have a socket communication bore; the ones along the manifolds have recessed portions at both the upper and the lower end surface, and either may have a socket communication bore. The bores of two adjacent header forming members in combination make it possible for an annular piping socket to be welded to the bores. It is a disadvantage that different types of header forming members have to be kept on stock and assembled in the correct order for specific applications, and that only one kind of header forming member can be connected to a socket pipe of a specific size.

Heat exchangers comprising a number of tube-formed heat exchanger elements arranged in a row are known from US patent application no. 10/330,467, where a number of elements/tubes having cup portions are combined into a stack. The cup portions define inlet and outlet manifolds, which are connected to an inlet and outlet pipe, respectively. The connections to the inlet and outlet pipes are provided by replacing two common tubes with two special tubes having an integrated manifold portion, which is especially adapted to provide a connection between the manifolds and the inlet pipe or outlet pipe. The manifold portions are provided with burr portions for connection to the cup portions of the adjacent common tubes. In order to avoid leakage the burr portions and cup portions have to match each other very precisely and be carefully assembled.

US patent no. 4,258,785 describes a cup-formed heat exchanger with pairs of plates provided with raised portions of bubbles, which are combined to provide header tank portions. To allow an insertion of a fitting for connection to an inlet or an outlet pipe into the row of pairs of plates, the adjacent plates have been modified by omitting the bubble portion and used in combination with an additional dish formed member. Each fitting has a bubble with an opening defining a flange extending into the opening of the adjacent additional dish formed member. The assembling is particular troublesome as the additional dish formed member have to be inserted between the fitting and the plate, and the bubble of the fitting have to fit exactly to the additional dish formed member, and only one type of fitting can be connected to an inlet or an outlet pipe of a specific size.

As indicated above, the heat exchanger using the "cup" principle has some design limitations and there is also a need for a heat exchanger with a more simple structure with a lower risk of leakage. Another disadvantage with heat exchangers using the "cup" principle is that the cup height also defines the height of the air fin. As the tool for providing the cup, determines the height of the cup, the cup principle is inflexible in terms of choice of air fin and configuration possibilities. Another disadvantage is the internal pressure drop caused by the design of the cups in the in- and outlet manifolds.

A plate and bar heat exchanger provides a higher degree of flexibility due to a wider range of configuration possibilities. The plate and bar heat exchanger is composed of plates and bars and air fins and is also known as the "plate and bar" heat exchanger. When assembling the plate and bar heat exchanger only the heat exchanger core is assembled. The manifold has to be secured to the heat exchanger core after the assembling and brazing process. In the manifolds all the in- and outlets has to be integrated as well as drain, connections for air bleeding, bypass, sensors of any kind etc. The manifold can for inst. be composed of an extruded profile, casted or punched, but because the manifolds are attached after the brazing process it allows the design to focus on the internal pressure drop and offers a wide range of configuration possibilities. The manifolds are normally secured to the heat exchanger core by welding. In order to weld the two parts together it is important that some material of a sufficient thickness is available on both parts in order not to burn through.

The plate and bar heat exchanger offers a more flexible solution in terms of choice of height of air fin, height of internal tube as no special tooling is required. However, a large number of parts are needed for assembling of the heat exchanger core, which results in higher production costs for the final heat exchanger.

US patent application No. 2010/0012303 describes a heat exchanger consisting of a stack of thin metal walled hollow platelets. The ends of the platelets are triangular with an angle of 120 degrees and are welded with a bead in the edges and the ends of a slot in form of a 120 degrees arc made in the connecting shell of an external manifold. This connection to a manifold is rather complicated and strenuous.

US patent no. 4377024 describes a method of producing a heat exchanger comprising a stack of core tubes. Projecting ends of the tubes are welded to the exterior of the header plates. However the core assembly afterwards has to be dipped into a liquid soldering flux. Welding alone is therefore not an alternative. Soldering is still needed.

US patent application No. 2001/0000879 discloses a heat exchanger of the multi-flow type having baffle members which are adapted to impart a zigzagging flow to the heat-exchange fluid in motion inside a flat tube and define, in conjunction with the inner wall of the flat tube, a flow path of a cross-sectional area having an equivalent diameter in the range of 0.4 to 1.5 mm. In one embodiment, the flat tube is formed by two halve flat tubes, where the terminal parts of the two halve flat tubes are bent before being assembled, whereby the bent parts constitute the insertion parts for insertion of the flat tube into the engaging holes of the header pipes of the heat exchanger.

### Summary of the invention

The object of the invention to provide a more simple heat exchanger which is easier to produce than previously known.

This is obtained by a method of producing a heat exchanger comprising a number of thin plates, wherein the plates are being pressed to provide pressings providing a predetermined flow of liquid through the channels so as to provide an internal reinforcement and an efficient heat transmission to the surrounding air flowing through the spaces between the channels; wherein a portion of the edges of the plates are processed into a thickness allowing a welding; wherein the plates are joined to provide channels between each pair of said plates; whereafter manifolds for delivering liquid to and from the channels are secured by welding to the processed portions of the edges of the plates; and wherein the portions of the edges of said plates are processed at the ends by folding into a thickness allowing a welding, and said joining of the plates to provide channels between each pair of said plates is performed by brazing.

As a result it is possible to combine the heat exchanger core made from the "cup" principle using only a low number of parts with the manifold principles known from heat exchangers such as the plate and bar heat exchanger. In this way the benefits from the flexibility in the plate and bar heat exchanger, the lower pressure drop from the separate manifolds and the fewer parts from the "cup" principle all adds up to a new simplified and cheaper way of manufacturing plate and fin heat exchangers.

The method may according to the invention further be characterized by the metal plates being composed of aluminum.

In another embodiment according to the invention the edges of the plates are processed into a thickness, which is sufficient for joining the heat exchanger elements to endplates with a row of holes of substantially the same size as the inlets and outlets from the heat exchanger elements.

Finally according to the invention the edges of the plates may also be processed into a thickness which is sufficient for joining the heat exchanger elements to inlet and outlet manifolds with a row of holes of the same size as the inlets and outlets from the heat exchanger elements.

### Brief Description of the Drawings

Figure 1 shows a known plate and fin heat exchanger with inlet and outlet manifolds
Figure 2 shows a heat exchanger core of the known plate and bar heat exchanger
Figure 3 shows the structure of the heat exchanger core of the known plate and bar heat exchanger
Figure 4 shows an embodiment of the heat exchanger core according to the invention
Figure 5 shows the structure of the heat exchanger core of a heat exchanger according to the invention
Figure 6 shows a tube plate for a heat exchanger element according to the invention before the edges have been processed to allow a welding
Figure 7 shows the profile of a tube plate for a heat exchanger element according to the invention before the edges have been processed to allow a welding
Figure 8 shows a tube plate for a heat exchanger element according to the invention after the edges have been processed at the corners to allow a welding at the corners
Figure 9 shows two tube plates forming a heat exchanger element according to the invention
Figure 10 shows an alternative embodiment of the tube plate, where the plate has been cut in a broader width to achieve a constant width along the whole plate after the processing
Figure 11 shows an alternative embodiment of the tube plate, where a small amount of material has been cut away at the end of the plate to allow the plate to be processed from the inside
Figure 12 shows an alternative embodiment using a solid metal plate instead of a row of end-blocks to create the distance between the heat exchanger elements and
Figure 13 shows an alternative embodiment using a manifold instead of a row of end-blocks to create the distance between the heat exchanger elements

### DETAILED DESCRIPTION OF THE INVENTION

A known heat exchanger illustrated in figure 1, is a plate and fin heat exchanger with a heat exchanger core 3, where the heat transmission takes place, an inlet manifold 1 and an outlet manifold 2 which are welded to the heat exchanger core 3. The heat source flows through the heat exchanger from the inlet connection 4 to the outlet connection 5, while it transfers heat to the air 17 flowing through the heat exchanger. The manifolds 1, 2 can be casted elements including connections or extruded profiles with connections welded to the manifold. Inlet connections 4 are in this example placed at the end of the inlet manifold 1. In many cases there will only be one inlet connection 4 and additional inlets will be used for e.g. a temperature sensor or a pressure sensor. The outlet connection 5 is in this example placed at the end of the outlet manifold 2.

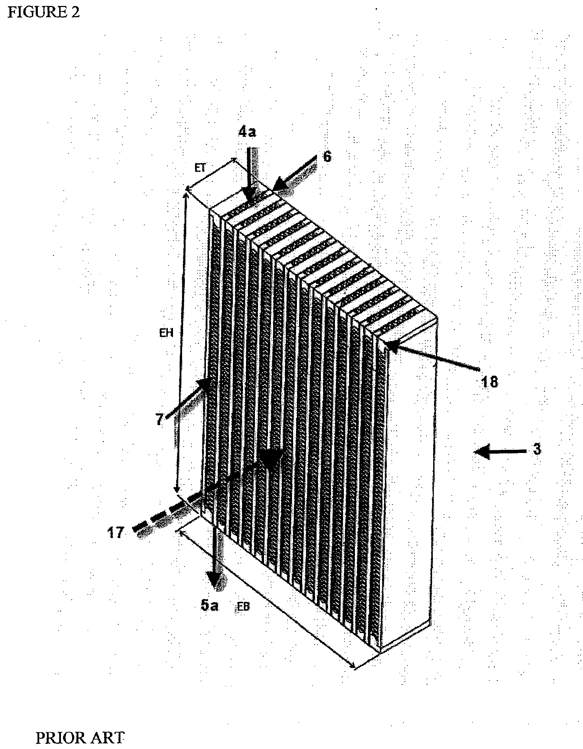

The heat exchanger core 3 in figure 2 is an example of a heat exchanger core 3 of the plate and bar type comprising of a row of heat exchanger elements 6 and a row of air fins 7. The heat source flows through the channels or cavities in the heat exchanger elements 6 from the inlets 4a to the outlets 5a of each heat exchanger element 6, while it transfers heat to air fins 7 and the air 17 flows through the air fins 7 in the heat exchanger core 3. The height EH of the heat exchanger core may vary. The heat exchanger width EB, and thickness ET, may also vary stepwise depending on choice of configuration. In an example of the heat exchanger core the dimensions are EH = 2200 mm, EB = 500 mm and ET = 94 mm. The air fins 7 can have many different forms (shapes and sizes) depending on the application in which the heat exchanger core 3 is to be used. The heat exchanger core 3 has an edge 18 along each side of the inlets and outlets, which allows the manifolds to be welded to the heat exchanger core.

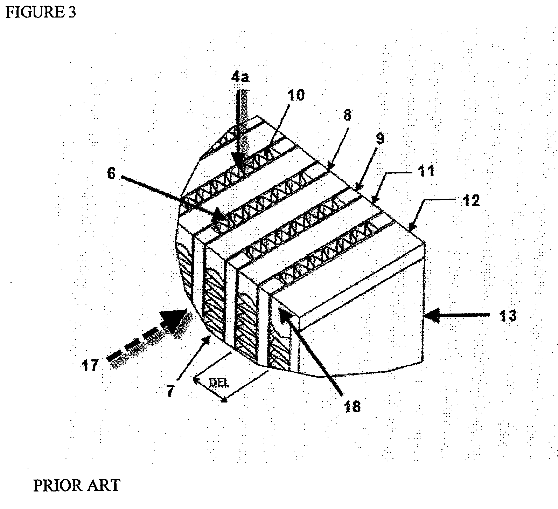

Figure 3 is a detailed illustration of the core of the plate and bar heat exchanger comprising a row of heat exchanger elements 6, each being composed of tube plates 8 and tube bars 9. Air fins 7 and end-blocks 11 separate adjacent heat exchanger elements. A turbulator 10 is placed between the tube plates 8 to increase the turbulence and heat transfer of the heat source, while it flows through the heat exchanger element from the inlet 4a to the outlet. The air fins 7 can have many different forms (shapes and sizes) depending on the application in which the heat exchanger is to be used. The end block 11 has the same height as the air fin and provides the correct distance in relation to the air fin and creates a solid surface between the heat exchanger elements in order to avoid any leakages once the manifold has been mounted e.g. by welding. The distance DEL between each row of air fins can also be varied. An example is DEL = 15 mm. The tube bars 9 should have a sufficient dimension in order to make them suitable for welding when joining the manifolds to the heat exchanger core. In each corner of the plate and bar heat exchanger core there is a corner block 12 to ensure a smooth finish with the side plate 13, and reinforce the heat exchanger core. The parts in the heat exchanger core are joined by a suitable joining technique e.g. brazing, soldering, adhesive bonding, etc.

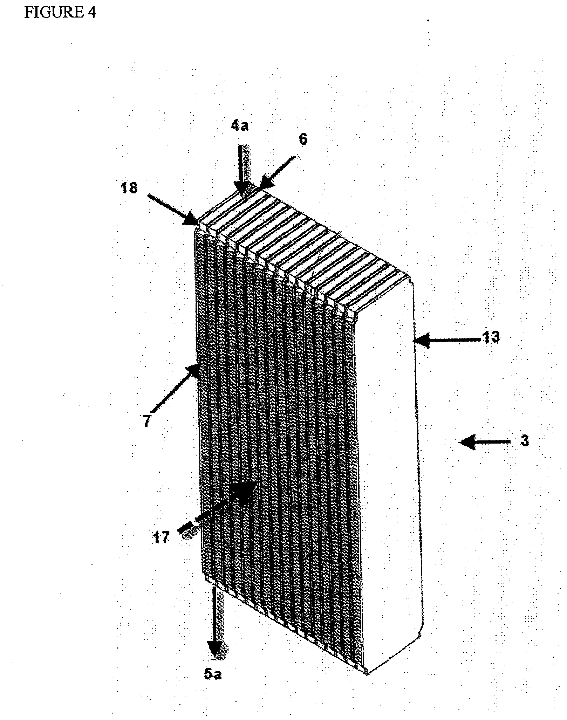

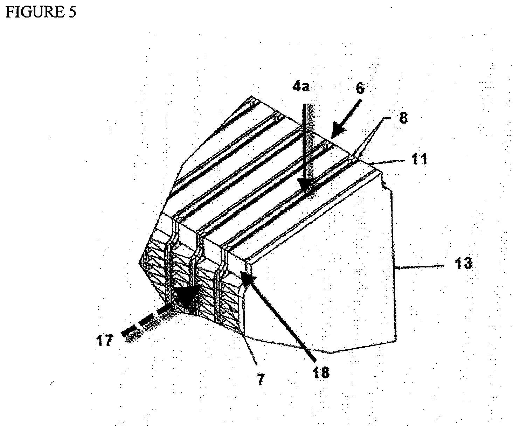

Figure 4 shows an embodiment of the heat exchanger core 3 according to the invention comprising of a row of heat exchanger elements 6 and a row of air fins 7. The heat source flows through the channels in the heat exchanger elements 6 from the inlets 4a to the outlets 5a in each heat exchanger element 6, while it transfers heat to air fins 7 and the air 17 flows through and passes the air fins 7 in the heat exchanger core 3. The air fins 7 can be formed in many ways (shapes and sizes) depending on the application in which the heat exchanger is to be placed. The heat exchanger core has an edge 18 along each side of the inlets and outlets, which allows the manifolds to be welded to the heat exchanger core. Figure 5 shows the details of the heat exchanger core according to the invention. The heat exchanger core comprises a row of heat exchanger elements 6 reinforced by side plates 13. The heat source passes through the heat exchanger elements 6 from the inlet 4a to the outlet at the other end of the heat exchanger core. Between the side plate 13 and the adjacent heat exchanger element and between each adjacent set of heat exchanger element there is an air fin 7 and an end block 11. The end block 11 has the same height as the air fin 7 and creates the correct distance in relation to the air fin and provides a solid surface between the heat exchanger elements in order to avoid leakages once the manifold is mounted by welding. The heat exchanger element 6 comprises two tube plates 8. Each tube plate is processed in both ends in such a way that it together with the end-blocks creates a solid edge 18 along each side of the inlets and outlets with a thickness, which allows the manifolds to be welded to the heat exchanger core. The parts in the heat exchanger core 3 are joined by a suitable joining technique e.g. brazing.

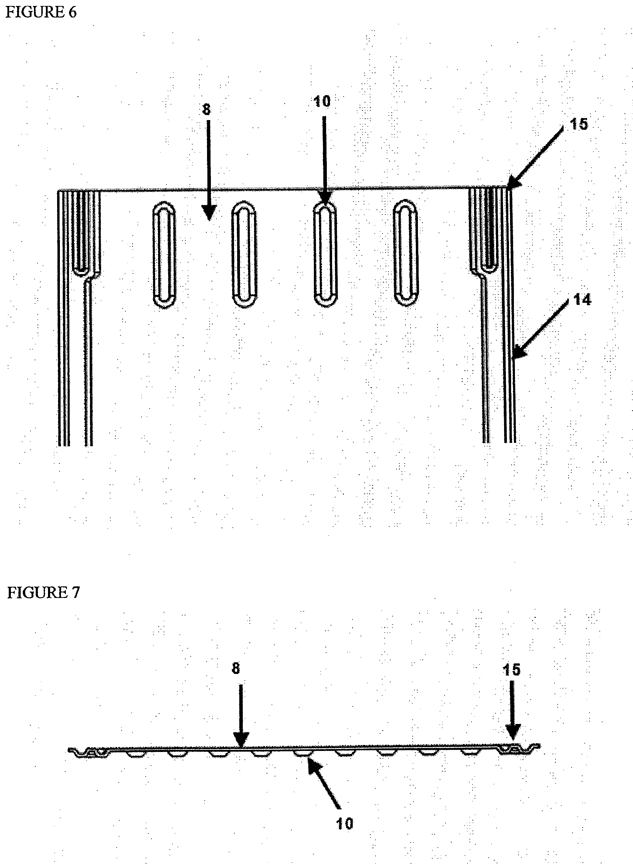

Figure 6 shows a piece of a tube plate 8 for a heat exchanger element according to the invention before the end of the edges 15 has been processed to allow a welding. The edges of the plates can be processed into a thickness, which is sufficient for a welding, by processing the edges in the corners 15 of the plates from the side. The edge 14 of the tube plate 8 is deformed in such a way, that when two tube plates 8 are stacked on top of each other they create a closed tube i.e. the heat exchanger element. Pressings 10 are provided in the tube plate 8. These pressings 10 have the same height as the edges 14 and will act as internal reinforcement to the heat exchanger element and at the same time improve heat transmission efficiency by forcing the internal fluid to flow in predetermined patterns.

Figure 7 is a sectional view of the profile of a tube plate 8 for a heat exchanger element according to the invention before the ends of the edges 15 have been processed to allow a welding. Pressings 10 are provided in the tube plate 8. These pressings 10 have the same height as the edges 14 and will act as an internal reinforcement to the heat exchanger element and at the same time improve heat transmission efficiency by forcing the internal fluid to flow in predetermined patterns.

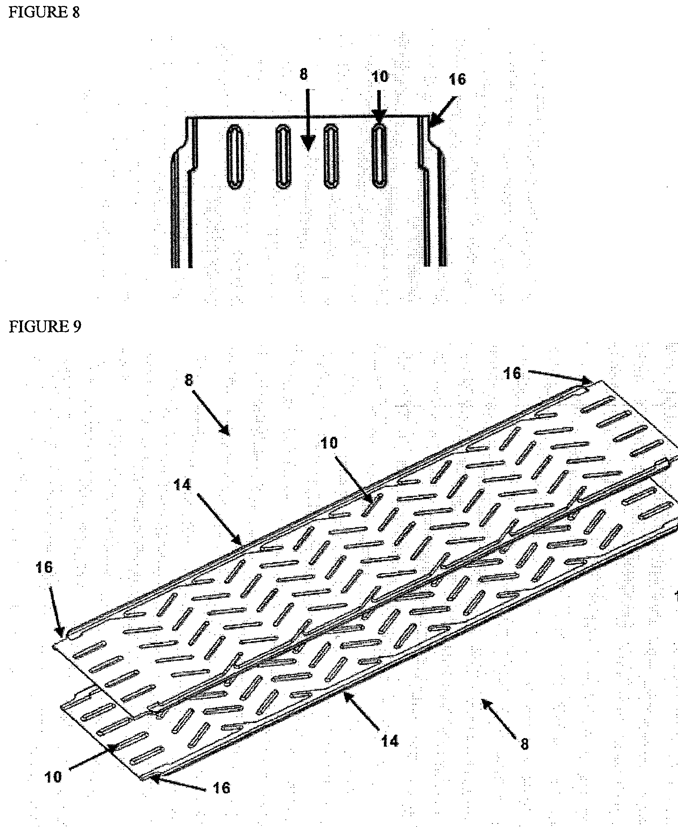

Figure 8 shows a tube plate 8 for a heat exchanger element according to the invention after the corners of the edges 16 have been processed to allow a welding. When stacking two tube plates 8 on top of each other they will create the heat exchanger element. After stacking there will be a contact surface at each pressing 10, along the edges and at the end of the edges 16. These contact surfaces which may be soldered to each other, provides a strong and leakage free heat exchanger element. The corners of the edges will together with the end-blocks create a solid edge 18 along each side of the heat exchanger core inlets and outlets with a thickness allowing the manifolds to be welded to the heat exchanger core.

Figure 9 shows two tube plates 8 forming a heat exchanger element according to the invention. The tube plates 8 may f. inst. be composed of aluminum. The plates are shown after the corners of the edges 16 have been processed to allow a welding. The rest of the edges will be soldered together. The heat exchanger element is provided by stacking the two tube plates 8 on top of each other. After the stacking there will be contact surfaces at each pressing 10, along the edges and at the end of the edges 16. These contact surfaces in connection with the joining process provide a strong and leakage free heat exchanger element. The corners of the edges will together with the end-blocks provide a solid edge 18 along each side of the heat exchanger core inlets and outlets with a thickness allowing the manifolds to be welded to the heat exchanger core.

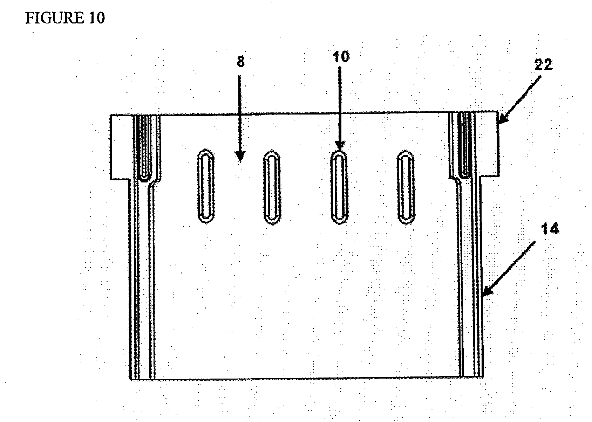

Figure 10 shows an alternative embodiment of the tube plate 8 for a heat exchanger element according to the invention where the plates of each heat exchanger element has been cut into a broader width in the corners 22 so that the plate will have a constant width after the corners 22 have been processed from the side to allow a welding. The edges 14 of the tube plate 8 has been deformed in such a way, that when two tube plates 8 are stacked on top of each other they create a closed tube i.e. the heat exchanger element. Pressings 10 are provided in the tube plate 8. These pressings 10 have the same height as the edges 14 and will act as an internal reinforcement to the heat exchanger element and at the same time improve the heat transmission efficiency by forcing the internal fluid to flow in predetermined patterns.

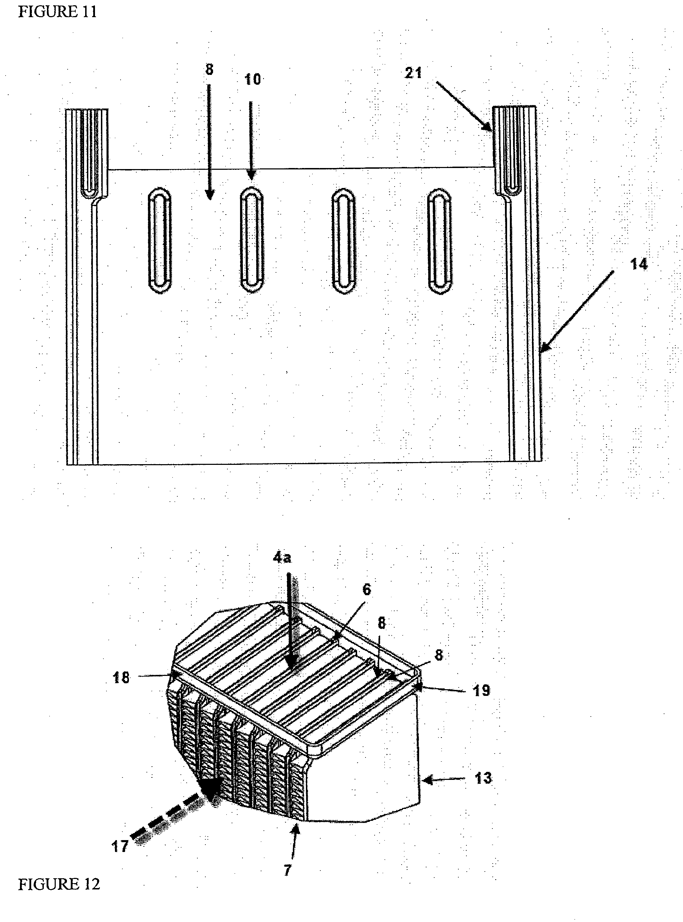

Figure 11 shows an alternative embodiment of the tube plate 8 for a heat exchanger element according to the invention where a small amount of material in the end of the plate has been removed so that the corners of the plate 21 can be processed from the inside and out. The edges 14 of the tube plate 8 has been deformed in such a way, that when two tube plates 8 are stacked on top of each other they will provide a closed tube i.e. the heat exchanger element. Pressings 10 are provided in the tube plate 8. These pressings 10 have the same height as the edges 14 and will act as an internal reinforcement to the heat exchanger element and at the same time improve the heat transmission efficiency by forcing the internal fluid to flow in predetermined patterns.

Figure 12 shows an alternative embodiment of the heat exchanger. The heat exchanger comprises a heat exchanger core with a row of heat exchanger elements 6 reinforced by side plates 13. Between each side plate 13 and the adjacent heat exchanger element and between each adjacent set of heat exchanger elements 6 there is an air fin 7, but no end block. Instead of multiple end-blocks, a solid metal plate 19 with a row of holes of the same size as the inlets and outlets from the heat exchanger elements is placed over the inlets of the heat exchanger elements at the inlet end and a similar plate is placed over the outlets of the heat exchanger elements at the outlet end. The plate 19 in the figure is shown with a burr. However, plates without a bur can also be used. The row of holes in the solid plates are placed with the same distance as the height of the air fins 7 and provides the correct distance in relation to the air fins. The heat exchanger element 6 is composed of two tube plates 8. Each tube plate is processed in both ends in such a way that it together with the solid metal plate 19 in each end provides a water tight connection after the joining process. The burr or the solid edges 18 along each side allows the manifolds to be welded on to the heat exchanger core. The parts including the solid end plates 19 in the heat exchanger core 3 are joined by a suitable joining technique e.g. brazing.

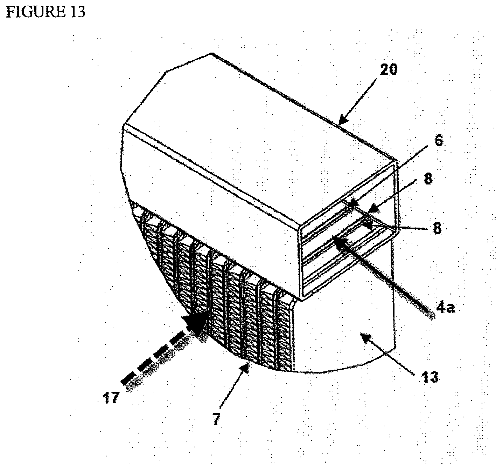

Figure 13 shows, a yet another alternative embodiment of the heat exchanger. The heat exchanger comprises a heat exchanger core with a row of heat exchanger elements 6 reinforced by side plates 13. Between each side plate 13 and the adjacent heat exchanger element and between each adjacent set of heat exchanger elements 6 there is an air fin 7, but no end block. Instead of multiple end-blocks, a manifold 20 with a row of holes of the same size as the inlets and outlets from the heat exchanger elements is placed over the inlets of the heat exchanger elements at the inlet end and a manifold with similar holes is placed over the outlets of the heat exchanger elements at the outlet end. The row of holes in the manifolds are placed with the same distance as the height of the air fins 7 and provides the correct distance in relation to the air fins. Each heat exchanger element 6 is composed of two tube plates 8. Each tube plate is processed in both ends in such a way that it together with the manifolds 20 in each end provides a water tight connection after the joining process. The parts including the manifold in the heat exchanger core 3 are joined by a suitable joining technique e.g. brazing.

The scope of the invention is not to be limited to the forms specifically disclosed and it will be apparent to a person skilled in the art that modifications and improvements may be made without deviating from the scope of the invention as defined by the claims. The edges of the tube plate in the heat exchanger element may for inst. be processed with different techniques such as rolling, folding, punching, etc and they may be processed along the full edge instead or only in the corners, processed at the ends or from the inside instead in the sides, etc.

The heat exchanger may be used for cooling of a combustion engine. Alternatively it may be used in connection with a wind turbine generator for cooling of the mechanical and/or electrical components.

## Claims

1. Method of producing a heat exchanger comprising a number of thin metal plates (8), wherein:
the plates (8) are being pressed to provide pressings (10) providing a predetermined flow of liquid through the channels so as to provide an internal reinforcement and an efficient heat transmission to the surrounding air flowing through the spaces between the channels;
a portion (21, 22) of the edges (14) of the plates (8) are processed into a thickness allowing a welding;
the plates (8) are joined to provide channels between each pair of said plates (8); whereafter
manifolds (20) for delivering liquid to and from the channels are secured by welding to the processed portions (21, 22) of the edges of the plates (8); **characterised in that**
the portions (21, 22) of the edges (14) of said plates (8) are processed at the ends by folding into a thickness allowing a welding, and **in that**
said joining of the plates (8) to provide channels between each pair of said plates (8) is performed by brazing.

2. Method according to claim 1, wherein the portions (21, 22) of the edges (14) of the plates (8) are processed into a thickness, which is sufficient for welding the two paired plates (8) forming a heat exchanger element (6) to the manifolds (20) with a row of holes of substantially the same size as the inlets and outlets from the channels between the joined plates (8) of the heat exchanger elements (6).

3. Method according to claim 2, wherein the two paired plates (8) forming the heat exchanger element (6) are joined by welding to endplates of the manifolds (20), said endplates having a row of holes of the same size as the inlets and outlets from the heat exchanger elements (6).

## Patentansprüche

1. Verfahren zum Herstellen eines Wärmetauschers, der eine Anzahl von dünnen Metallplatten (8) umfasst, wobei:
die Platten (8) zum Vorsehen von Pressungen (10) gepresst werden, die einen vorgegebenen Strom von Flüssigkeit durch die Kanäle vorsehen, um eine innere Verstärkung und eine wirksame Wärmeübertragung auf die Umgebungsluft vorzusehen, welche durch die Räume zwischen den Kanälen strömt;
ein Abschnitt (21, 22) der Kanten (14) der Platten (8) auf eine Stärke verarbeitet wird, die eine Schweißung ermöglicht;
die Platten (8) zum Vorsehen von Kanälen zwischen jedem Paar der Platten (8) zusammengefügt werden;
wonach Verteiler (20) zum Liefern von Flüssigkeit zu und von den Kanälen durch Schweißen an die verarbeiteten Abschnitte (21, 22) der Kanten (14) der Platten (8) befestigt werden; **dadurch gekennzeichnet, dass**
die Abschnitte (21, 22) der Kanten (14) der Platten (8) an den Enden durch Falzen auf eine Stärke, die eine Schweißung ermöglicht, verarbeitet werden, und dass
das Zusammenfügen der Platten (8) zum Vorsehen von Kanälen zwischen jedem Paar der Platten (8) durch Hartlöten ausgeführt wird.

2. Verfahren nach Anspruch 1, wobei die Abschnitte (21, 22) der Kanten (14) der Platten (8) auf eine Stärke verarbeitet werden, die zum Schweißen der zwei gepaarten Platten (8), welche ein Wärmetauscherelement (6) ausbilden, an die Verteiler (20) mit einer Reihe von Löchern mit im Wesentlichen derselben Größe als die Einlässe und Auslässe von den Kanälen zwischen den zusammengefügten Platten (8) der Wärmetauscherelemente (6) genügt.

3. Verfahren nach Anspruch 2, wobei die zwei gepaarten Platten (8), die das Wärmetauscherelement (6) ausbilden, durch Schweißen an Endplatten der Verteiler (20) zusammengefügt werden, wobei die Endplatten eine Reihe von Löchern mit im Wesentlichen derselben Größe als die Einlässe und Auslässe von den Wärmetauscherelementen (6) aufweisen.

## Revendications

1. Procédé de production d'un échangeur de chaleur comprenant un nombre de fines plaques métalliques (8), dans lequel :
les plaques (8) sont comprimées pour fournir des compressions (10) fournissant un écoulement déterminé de liquide à travers les canaux de façon à fournir un renforcement intérieur et un transfert de chaleur efficace vers l'air environnant s'écoulant à travers les espaces entre les canaux ;
une partie (21, 22) des bords (14) des plaques (8) est usinée en une épaisseur permettant un soudage ;
les plaques (8) sont jointes de façon à fournir des canaux entre chaque paire desdites plaques (8) ;
après quoi
des conduits collecteurs (20) pour fournir du liquide vers et depuis les canaux sont fixés par soudage aux parties usinées (21, 22) des bords (14) des plaques (8) ; **caractérisé en ce que**
les parties (21, 22) des bords (14) desdites plaques (8) sont usinées aux extrémités par pliage en une épaisseur permettant un soudage, et **en ce que** ledit jointage des plaques (8) pour fournir des canaux entre chaque paire desdites plaques (8) est réalisé par brasage.

2. Procédé selon la revendication 1, dans lequel les parties (21, 22) des bords (14) des plaques (8) sont usinées en une épaisseur qui est suffisante pour souder les deux plaques (8) appariées formant un élément (6) d'échangeur de chaleur vers les conduits collecteurs (20) avec une rangée d'orifices d'essentiellement la même taille que les entrées et les sorties depuis les canaux entre les plaques jointes (8) des éléments (6) d'échangeur de chaleur.

3. Procédé selon la revendication 2, dans lequel les deux plaques (8) appariées formant l'élément (6) d'échangeur de chaleur sont jointes par soudage en plaques d'extrémité des conduits collecteurs (20), lesdites plaques d'extrémité ayant une rangée d'orifices d'essentiellement la même taille que les entrées et les sorties depuis les éléments (6) d'échangeur de chaleur.
